# FASCICULE DE BREVET EUROPEEN

(11) **EP 2 154 068 B1**
(45) Date de publication et mention de la délivrance du brevet: **14.12.2011**
(21) Numéro de dépôt: 09290192.5
(22) Date de dépôt: 17.03.2009
(51) Int. Cl.: B64D 11/06

(54) **Agencement d'accoudoir de siège en épi sécurisé, siège et ensemble de deux sièges munis d'un tel agencement**
Gesicherte schräge Armlehnenanordnung eines Sitzes, Sitz und Einheit aus zwei Sitzen, die mit einer solchen Anordnung ausgestattet sind
Secured layout of armrest for seats positioned at an angle, seat and set of two seats fitted with such a layout

(30) Priorité: 17.03.2008 FR 0851700
(43) Date de publication de la demande: 17.02.2010
(73) Titulaire: Société Industrielle et Commerciale de Matériel Aéronautique, 36100 Issoudun (FR)
(72) Inventeur: Cailleteau, Jérémy, 36120 Saint-Août (FR)
(74) Mandataire: Marconnet, Sébastien

(56) Documents cités:
- WO-A-2007/124398
- DE-A1- 3 925 233
- FR-A- 2 770 468

## Description

### DOMAINE TECHNIQUE DE L'INVENTION

La présente invention concerne un agencement d'accoudoir de siège en épi sécurisé destiné aux véhicules de transport terrestres ou aériens, en particulier aux aéronefs. Cet agencement est destiné à un siège dont l'axe n'est pas disposé parallèlement à l'axe du véhicule de transport dans lequel il est fixé. L'invention se rapporte également à un siège ainsi qu'à un ensemble de sièges muni d'un tel agencement.

### ÉTAT DE LA TECHNIQUE

Généralement, les sièges d'avion sont disposés parallèlement à son axe longitudinal, mais, dernièrement, pour améliorer le confort des passagers, le concept de sièges dit « en épi » a été développé. En effet, cette disposition, dans laquelle l'axe du siège est décalé par rapport à l'axe du véhicule de transport dans lequel il est fixé, permet d'obtenir un gain de place tout en installant des sièges couchettes de dimensions suffisantes pour garantir le confort des passagers.

Un tel agencement de sièges d'avion en épi est connu du document WO2007/124398 Ce document décrit un agencement de sièges d'avion dans lequel les sièges sont disposés deux à deux, de façon à former un angle aigu. On connaît également d'autres configurations dans lesquelles les sièges forment un angle obtus.

Cependant dans les sièges en épi de l'art antérieur, les accoudoirs du côté angle fermé font obstacle aux occupants du siège en cas de choc puisque ces derniers sont en général projetés dans l'axe du véhicule et donc en direction de l'accoudoir. Ainsi, dans les concepts d'accoudoir pour siège en épi, il existe un fort risque de blessures dues à l'accoudoir en cas de choc.

Le document DE-3925233 décrit un siège comportant un accoudoir pliable dont l'axe peut être décalé angulairement par rapport à la structure d'assise. Le document FR-2770468 décrit un siège de conduite pour engins comportant un accoudoir pouvant pivoter autour d'un axe vertical.

### OBJET DE L'INVENTION

La présente invention propose un véhicule de transport comportant un agencement d'accoudoir de siège en épi sécurisé selon la revendication 1, c'est-à-dire permettant de réduire les risques de blessures dues à l'accoudoir en cas de choc.

Pour cela la présente invention prévoit de laisser un espace entre la structure d'assise du siège et l'accoudoir pour permettre à l'occupant du siège d'être projeté dans l'axe de l'avion lors d'un choc, sans pour autant percuter l'accoudoir.

Plus précisément, l'invention a pour objet un agencement d'accoudoir de siège en épi, dans lequel l'accoudoir est décalé angulairement par rapport au siège, de manière à former un espacement libre entre le siège et l'accoudoir, l'axe de l'accoudoir étant sensiblement parallèle à l'axe du véhicule de transport.

Cet agencement d'accoudoir permet à l'occupant, en cas de choc, d'être projeté dans l'axe du véhicule sans percuter l'accoudoir alors qu'il possède une énergie impulsionnelle maximale. Cette configuration permet en outre d'éviter la torsion du tronc et de la colonne vertébrale et elle permet de replacer le passager en configuration crash frontal.

Selon différents modes de réalisation particuliers, l'invention prévoit :
- un espacement libre entre l'accoudoir et le siège en forme de V, afin de permettre un gain de place ;
- un logement sous l'espacement libre afin de permettre à l'occupant du siège de disposer d'une zone de rangement;
- l'intégration d'un matériau absorbeur de choc du côté de l'accoudoir qui fait face au siège, afin de réduire les risques de blessures pour l'occupant du siège en cas de choc ;
- un accoudoir qui comprend un support et un plateau sur lequel l'occupant peut poser son bras, le plateau étant plus large que le support afin d'offrir un meilleur appui au bras du passager ;
- une partie de l'accoudoir est souple de manière à limiter les risques de blessures pour l'occupant en cas de choc ;
- un accoudoir escamotable afin de faciliter l'accès au siège à une personne handicapée ;
- un accoudoir escamotable verticalement entre une position dite haute et une position dite basse par rapport à une position standard, l'accoudoir en position basse étant au niveau de la structure d'assise afin de faciliter l'accès à une personne handicapée.

L'invention concerne également un siège en épi pour véhicule de transport, comportant au moins un dossier et une assise d'axe décalé angulairement par rapport à l'axe du véhicule de transport, et comportant au moins un accoudoir, du côté angle fermé par rapport à l'axe de l'avion, décalé selon l'agencement décrit ci-dessus.

Selon différents modes de réalisation particuliers, l'invention prévoit que :
- une console est disposée du côté angle ouvert du siège ;
- cette console inclut plusieurs espaces de rangement ;
- une coque enveloppe le dossier du siège et la paroi externe de l'accoudoir ;
- une coque enveloppe le dossier du siège, la paroi externe de l'accoudoir et la console ;
- la coque a globalement une forme de V ;
- la coque est en matériau thermodurcissable ;
- la coque est formée par une pièce d'un seul tenant ;
- un écran vidéo est intégré en face arrière de la coque ;
- des repose-pieds sont intégrés en face arrière de la coque.

L'invention concerne également un ensemble de deux sièges pour véhicule de transport, l'axe d'au moins un siège étant décalé angulairement par rapport à l'axe du véhicule de transport, et chacun des sièges comportant au moins un accoudoir du côté angle fermé décalé selon l'agencement défini ci-dessus, dans lequel les sièges et les accoudoirs des sièges d'extrémité sont enveloppés par une coque.

Suivant différents modes de réalisation, l'invention prévoit que :
- la coque est en matériau thermodurcissable ;
- la coque enveloppe les deux sièges d'un seul tenant ;
- la coque est constituée de deux parties, chacune des parties enveloppant un des sièges, ce qui permet de produire les sièges individuels et les ensembles de deux sièges sur une même chaîne de fabrication ;

- les sièges comportant des dossiers, la coque présente au niveau des dossiers une hauteur sensiblement égale à celle des dossiers ;
- la coque présente au niveau des accoudoirs côté couloir une hauteur sensiblement égale à celle de l'assise sur la longueur de cette dernière ;
- les accoudoirs présentent une partie frontale enveloppée par la coque ;
- une console centrale est disposée entre les deux sièges ; cette console centrale est formée de préférence par deux consoles, chacune des consoles étant attenante à un des sièges ;
- la coque présente un renfoncement au niveau de la console centrale afin d'augmenter l'espace disponible à l'arrière du siège ;
- des écrans vidéos sont intégrés en face arrière de la coque ;
- des repose-pieds sont intégrés dans le renfoncement.

### BRÈVE DESCRIPTION DES FIGURES

L'invention sera mieux comprise à la lecture de la description détaillée qui suit en référence aux figures annexées qui représentent respectivement :
- la figure 1, une vue en perspective d'un siège en épi comportant un accoudoir conforme à un mode de réalisation de la présente invention ;
- la figure 2, une vue en perspective d'un accoudoir en position haute selon un mode de réalisation de la présente invention ;
- la figure 3, une vue en perspective d'un accoudoir en position basse selon un mode de réalisation de la présente invention ;
- la figure 4, une vue en perspective d'un mécanisme d'accoudoir conforme à la présente invention ;
- la figure 5, une vue de dessus d'un intérieur d'avion agencé selon la présente invention ;
- la figure 6, une vue en perspective d'un ensemble de sièges suivant un mode de réalisation de la présente invention ; et
- la figure 7, une vue en perspective de l'arrière d'un siège conforme à la présente invention.

### EXEMPLE DE RÉALISATION

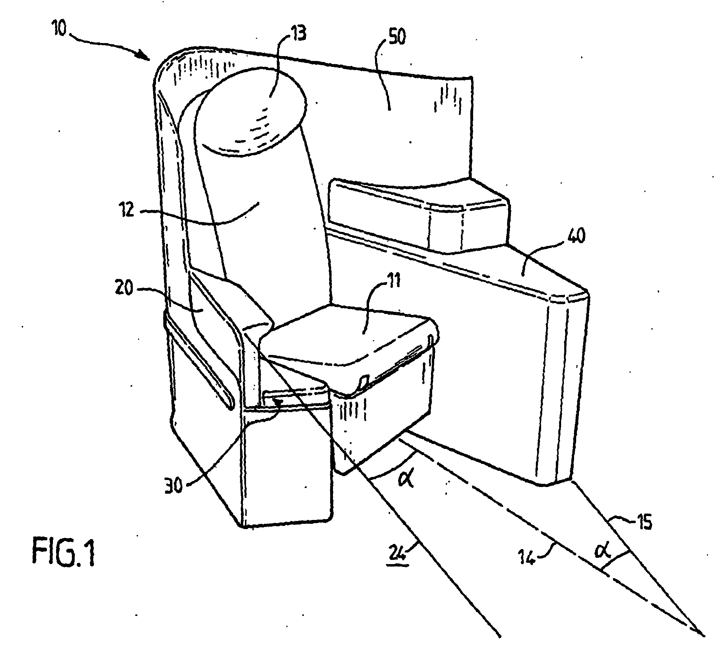

La figure 1 présente un siège 10 d'avion comportant un accoudoir du côté angle fermé 20 conforme à un mode de réalisation de la présente invention. Ce siège comporte une assise 11, un dossier 12 et un repose-tête 13. L'axe 14 de ce siège 10 est décalé par rapport à l'axe 15 de l'avion si bien que l'axe 14 du siège 10 et l'axe de l'avion 15 forment un angle alpha. L'accoudoir 20 est décalé angulairement par rapport au siège 10 si bien qu'un espacement libre 30 se trouve entre le siège 10 et l'accoudoir 20. Cette espacement libre 30 a une forme de V et il forme un logement 30 sous lequel le passager peut ranger des effets personnel. Ce décalage angulaire de l'accoudoir 20 par rapport au siège 10 permet à l'occupant du siège d'être projeté dans l'axe 15 de l'avion en cas de choc sans pour autant percuter l'accoudoir. Cette configuration évite la torsion du tronc du passager et replace le passager en configuration crash frontal.

Le siège 10 comporte également une console 40 accolée au siège 10 ainsi qu'une coque 50 qui enveloppe la console 40, le dossier du siège 13 et l'accoudoir 20. La coque 50 a une hauteur au niveau de l'accoudoir égale à celle de l'assise 11 du siège et elle enveloppe également les parois latérales du logement 30.

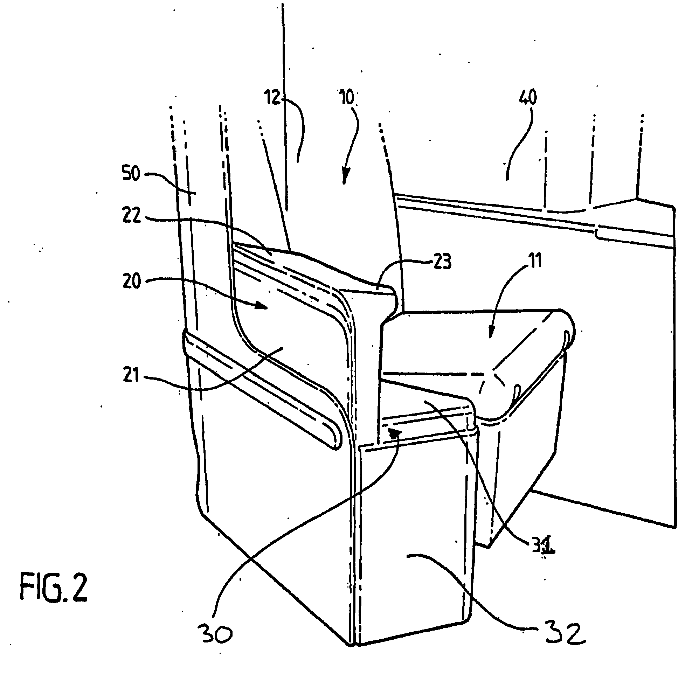

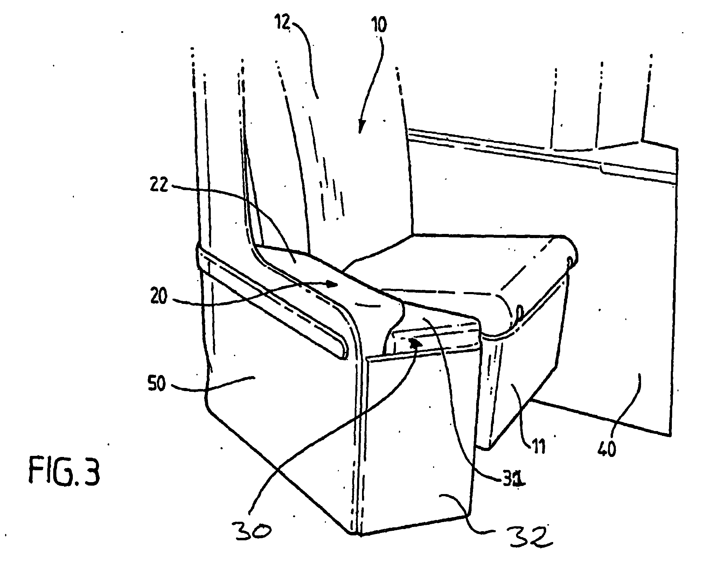

Les figures 2 et 3 représentent l'accoudoir 20 ainsi que le logement 30 entre le siège 10 et l'accoudoir 20. L'accoudoir comprend un support vertical 21 ainsi qu'un plateau 22, tous deux décalés angulairement par rapport au siège 10. Le plateau 22 permet à l'occupant du siège de poser son bras. La partie 23 du plateau qui fait face au siège comporte un matériau absorbeur de choc, afin de limiter au maximum les risques de blessures pour l'occupant du siège s'il percute l'accoudoir 20. Dans cet exemple de réalisation, le matériau absorbeur de choc est une mousse polyuréthane.

L'accoudoir est escamotable entre une position haute, représentée sur la figure 2 et une position basse, représentée sur la figure 3. Lorsque l'accoudoir est dans sa position haute, il a une hauteur qui permet à l'occupant du siège de reposer son bras confortablement. Par ailleurs, en position basse, le plateau 22 de l'accoudoir est sensiblement à la même hauteur que l'assise du siège 11 de façon à faciliter l'accès au siège pour une personne handicapée.

Le logement 30 comprend une paroi latérale 32 et un plateau horizontal 31 qui a également une hauteur sensiblement égale à celle de l'assise du siège. Le logement 30 contient le mécanisme qui permet à l'accoudoir 20 d'être escamotable, mais il peut aussi contenir un espace de rangement pour l'occupant du siège.

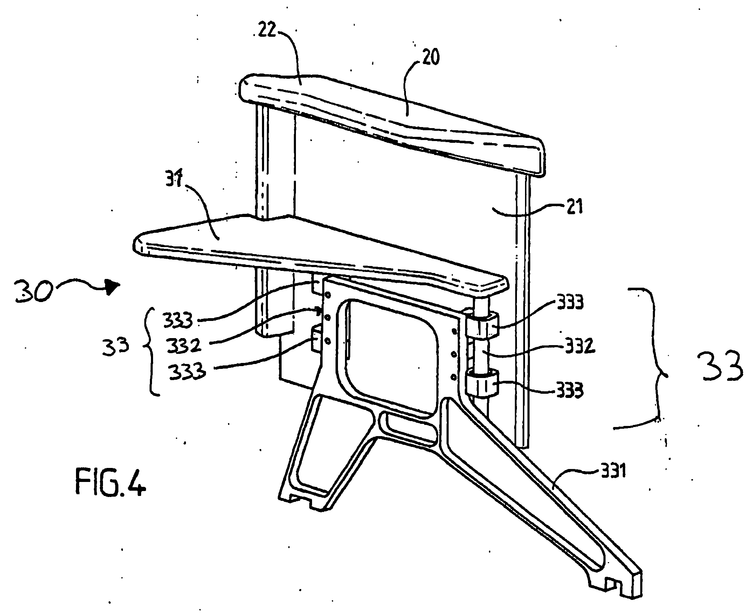

La figure 4 représente une vue en perspective de l'intérieur du logement 30. Ainsi sous le plateau horizontal 31 du logement 30 se trouve un mécanisme de glissière verticale 33 sur laquelle est fixé le support 21 de l'accoudoir 20. Ce mécanisme de glissière verticale comprend un pied 331 solidaire du sol de l'avion ainsi que deux colonnes 332. Autour de chacune des colonnes 332 se trouvent deux bagues 333 qui peuvent coulisser autour des colonnes 332. Ces bagues 333 sont fixées sur la paroi intérieure du support 21 de l'accoudoir, si bien que l'accoudoir coulisse avec ces bagues 333 entre une position haute et une position basse. En position basse, le plateau 22 de l'accoudoir 20 repose sur le plateau horizontal 31 du logement 30, tandis qu'en position haute, représentée sur la figure 4, un système de verrouillage maintient l'accoudoir en position haute.

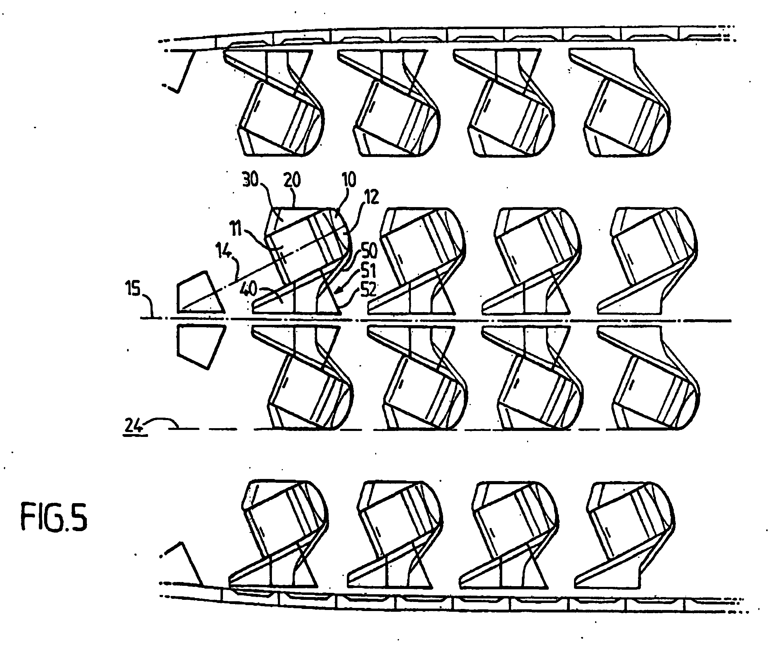

La figure 5 représente une vue de dessus d'un intérieur d'un avion présentant des sièges 10 et leur accoudoir 20 selon un mode de réalisation de la présente invention. L'axe des sièges 14 est décalé angulairement par rapport à l'axe 15 de l'avion. Ces sièges comportent une assise 11, un dossier 12, un accoudoir du côté angle fermé 20, ainsi qu'un espacement libre 30 entre l'accoudoir du côté angle fermé et le siège 10. L'espacement libre 30 est dimensionné de telle sorte que l'axe de l'accoudoir 24 soit parallèle à l'axe de l'avion 15. Chaque siège présente une console 40 du côté angle ouvert. Par ailleurs, chaque siège 10, son accoudoir 20 ainsi que sa console 50, est enveloppé par une coque 50 qui épouse la forme du siège, de l'accoudoir et de la console au plus près. La coque présente derrière la console centrale un renfoncement 51. Dans ce renfoncement 51 se trouvent des repose-pieds 52 permettant aux occupants des sièges arrière d'allonger leurs jambes.

Les sièges 10 sont disposés dans l'avion en trois rangées : la rangée centrale est formé par des ensembles de deux sièges accolés, tandis que les rangées latérales sont formées par une succession de sièges placés les uns derrière les autres.

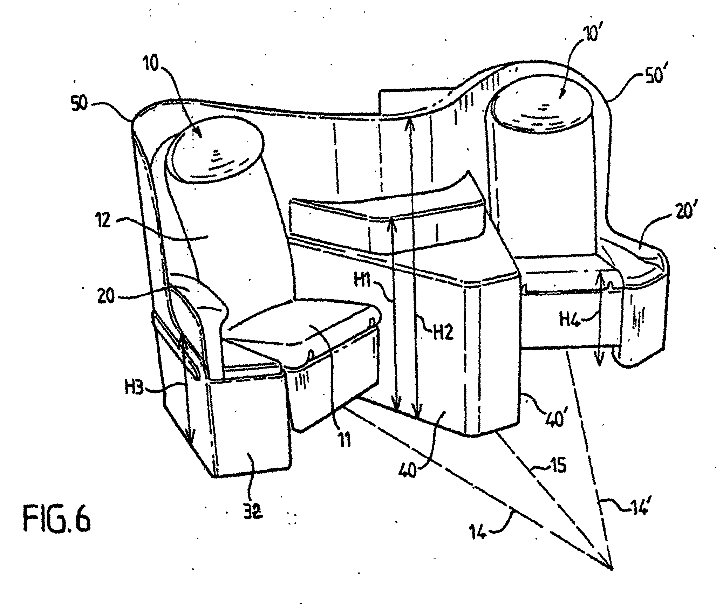

Les deux sièges accolés de la rangée centrale forme un ensemble de sièges représenté sur la figure 6. Le siège 10 comprend un dossier 12, une assise 11 et un accoudoir 20 du côté angle fermé. L'accoudoir 20 est décalé par rapport à l'assise 11 de manière à laisser espacement libre 30 entre l'assise 11 et l'accoudoir 20. Cette zone ouverte 30, en forme de V, permet à l'occupant du siège de se mettre dans l'axe de l'avion en cas de choc, sans pour autant percuter l'accoudoir. Par ailleurs, sous cette zone ouverte, on trouve un logement 30 qui permet à l'occupant de ranger des effets personnels.

Les deux sièges de la figure 6 peuvent être dépliés en position couchette. Ils sont agencés de telle sorte que leurs axes respectifs 14 et 14' soient décalés par rapport à l'axe 15 de l'avion et qu'ils forment un V. En outre, à chacun des sièges 10 et 10' est accolé une console 40 ou 40'. Ces deux consoles occupent l'espace en forme de V entre les deux sièges en épi. Ces deux consoles 40 ou 40' ont une hauteur H1 suffisante pour isoler les occupants des deux sièges l'un de l'autre lorsque les sièges sont en position couchette mais elle permet aux occupants des deux sièges de se voir lorsque les deux sièges sont en position assise.

Chaque siège 10 ou 10', ainsi que leur accoudoir du côté angle fermé 20 ou 20', est enveloppé par une coque 50 ou 50'. La coque a une hauteur H2 au niveau du dossier 12 suffisante pour isoler la tête de l'occupant d'un siège lorsque celui-ci est en position assise, et elle a une hauteur H3 inférieure à H2 et égale à la hauteur H4 de l'assise au niveau des accoudoirs 20 et 20'.

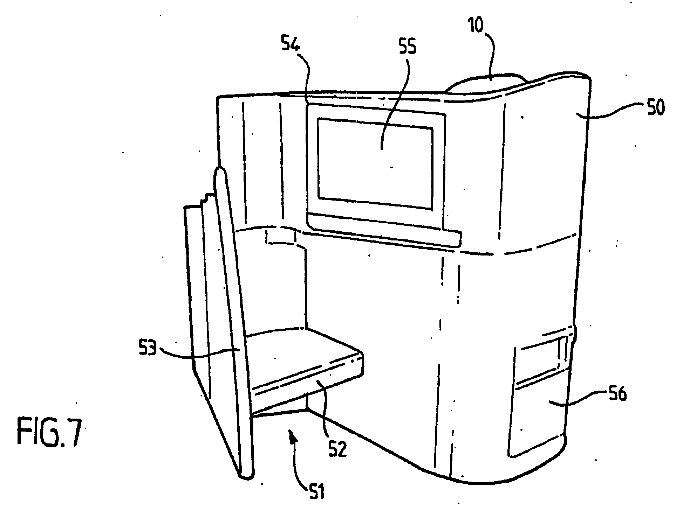

La figure 7 représente la face arrière d'un siège selon la présente invention. La coque présente un renfoncement 51 derrière la console centrale afin de laisser plus de place derrière cet ensemble de sièges : en particulier dans ce renfoncement 51 se trouve une cloison verticale 53, et un repose-pieds 52 permettant à l'occupant du siège arrière d'allonger ses jambes et de reposer ses pieds sur le repose-pieds 52, tout en réalisant un gain de place. Sur la face arrière de la coque se trouve également un renfoncement 54 dans lequel est inclus un écran vidéo 55, ainsi que divers logements 56, permettant aux occupants des sièges qui font face à la face arrière de la coque de ranger leurs effets personnels.

L'invention n'est pas limitée aux exemples décrits et représentés. Il est par exemple possible de réaliser d'un seul tenant l'ensemble de deux sièges et de réaliser une coque d'un seul tenant qui enveloppe les deux sièges ainsi que leurs accoudoirs. Il est également possible de réaliser un ensemble d'au moins trois sièges pour véhicule de transport, avec des sièges d'extrémité comportant au moins un accoudoir du côté angle fermé décalé angulairement par rapport à son siège, comme décrit précédemment, et dans lequel les sièges et les accoudoirs des sièges d'extrémité sont enveloppés par une coque.

Par ailleurs d'autres mécanismes peuvent être utilisés pour rendre l'accoudoir escamotable, en particulier l'accoudoir peut être fixé au dossier du siège par une liaison pivot et, dans ce cas, il pivote entre une position horizontale où l'occupant du siège peut reposer son bras et une position verticale dans laquelle l'accès au siège est dégagé de manière à faciliter l'installation d'une personne handicapée.

## Revendications

1. Véhicule de transport comportant un siège,
- ce véhicule présentant un axe (15) longitudinal,
- le siège comportant un accoudoir (20) ayant un plateau (22) permettant à l'occupant du siège de poser son bras, cet accoudoir (20) présentant un axe (24) qui s'étend suivant la direction longitudinale du plateau (22),
- cet axe (24) étant décalé angulairement par rapport à la structure d'assise (11) du siège (10), de manière à laisser un espacement libre (30) entre le siège (10) et l'accoudoir (20),
- le siège étant en épi (10), l'axe (24) de l'accoudoir (20) est sensiblement parallèle à l'axe (15) longitudinal du véhicule de transport.

2. Véhicule de transport selon la revendication 1, **caractérisé en ce que** l'espacement libre (30) entre l'accoudoir (20) et la structure d'assise (11) du siège (10) a une forme de V.

3. Véhicule de transport selon l'une quelconque des revendications précédentes, **caractérisé en ce que** un logement (30) est intégré sous l'espacement libre.

4. Véhicule de transport selon l'une quelconque des revendications précédentes, **caractérisé en ce que** l'accoudoir (20) comporte un matériau absorbeur de choc.

5. Véhicule de transport selon l'une quelconque des revendications précédentes, **caractérisé en ce que** une partie (23) de l'accoudoir est souple.

6. Véhicule de transport selon l'une quelconque des revendications précédentes, **caractérisé en ce que** l'accoudoir (20) comprend un support (21) et un plateau horizontal (31), le plateau (31) étant plus large que le support (21), de telle sorte qu'une partie du plateau dépasse du support, du côté du support qui fait face à l'assise du siège.

7. Véhicule de transport selon l'une quelconque des revendications précédentes, **caractérisé en ce que** l'accoudoir (20) est escamotable.

8. Véhicule de transport selon la revendication précédente, **caractérisé en ce que** l'accoudoir (20) est escamotable verticalement entre une position haute et une position basse dans laquelle le haut de l'accoudoir est au niveau de l'assise (11) du siège (10),

9. Véhicule de transport défini selon l'une des revendications 1 à 8, intégrant un siège comportant au moins un dossier (12) et une assise (11) d'axe (14) et comportant au moins un accoudoir (20), du côté angle fermé par rapport à un axe (15) longitudinal du véhicule,
- cet accoudoir (20) comportant un plateau (22) permettant à l'occupant du siège de poser son bras, cet accoudoir (20) présentant un axe (24) qui s'étend suivant la direction longitudinale du plateau (22),
- cet axe (24) d'accoudoir étant décalé angulairement par rapport à la structure d'assise (11) du siège (10), de manière à laisser un espacement libre (30) entre le siège (10) et l'accoudoir (20),
**caractérisé en ce que**
- l'axe (14) de l'assise est décalé angulairement par rapport à l'axe (15) longitudinal du véhicule de transport,
- cet axe (24) d'accoudoir étant sensiblement parallèle à l'axe (15) longitudinal du véhicule de transport.

10. Véhicule de transport défini selon la revendication 9, intégrant un siège en épi **caractérisé en ce que** une console (40) est disposée du côté angle ouvert du siège à côté de ce siège.

11. Véhicule de transport défini selon la revendication précédente, intégrant un siège en épi **caractérisé en ce que** la console (40) inclut plusieurs espaces de rangement

12. Véhicule de transport défini selon la revendication 10 ou 11, intégrant un siège en épi **caractérisé en ce que** l'accoudoir (20) présente une paroi externe, et **en ce que** une coque (50) enveloppe la parol externe de l'accoudoir (20) et le dossier (12) du siège.

13. Véhicule de transport défini selon l'une quelconque des revendications 10 à 12, intégrant un siège en épi **caractérisé en ce que** une coque (50) enveloppe le dossier (12) du siège, la paroi externe de l'accoudoir (20) et la console (40).

14. Véhicule de transport défini selon l'une quelconque des revendications 12 et 13, intégrant un siège en épi **caractérisé en ce que** la coque (50) a globalement une forme de V.

15. Véhicule de transport défini selon l'une quelconque des revendications 12 à 14, intégrant un siège en épi **caractérisé en ce que** la coque (50) est en matériau thermodurcissable.

16. Véhicule de transport défini selon l'une quelconque des revendications 12 à 15, intégrant un siège en épi **caractérisé en ce que** la coque (50) est formée par une pièce d'un seul tenant.

17. Véhicule de transport défini selon l'une quelconque des revendications 12 à 16, intégrant un siège en épi **caractérisé en ce que** un écran vidéo (55) est intégré en face arrière de la coque (50).

18. Véhicule de transport défini selon l'une quelconque des revendications 12 à 17, intégrant un siège en épi **caractérisé en ce que** des repose-pieds (52) sont intégrés en face arrière de la coque (50).

19. Véhicule de transport défini selon l'une des revendications 9 à 18, intégrant un siège en ensemble de deux sièges (10, 10').

20. Véhicule de transport défini selon la revendication 19, Intégrant un siège en ensemble de deux sièges (10, 10') **caractérisé en ce que** une coque (50) enveloppe l'ensemble de deux sièges (10,10').

21. Véhicule de transport défini selon la revendication précédente, intégrant un siège en ensemble de deux sièges (10, 10') **caractérisé en ce que** la coque (50) est en matériau thermodurcissable.

22. Véhicule de transport défini selon la revendication 20 ou 21 intégrant un siège en ensemble de deux sièges (10, 10') **caractérisé en ce que** la coque (50) enveloppe les deux sièges (10, 10') d'un seul tenant.

23. Véhicule de transport défini selon l'une quelconque des revendications 20 et 21, intégrant un siège en ensemble de deux sièges (10, 10') **caractérisé en ce que** la coque (50) est constituée de deux parties, chacune des parties enveloppant un des sièges, ce qui permet de produire des sièges individuels et des ensembles de deux sièges sur une même chaîne de fabrication.

24. Véhicule de transport défini selon l'une quelconque des revendications 20 à 23, intégrant un siège en ensemble de deux sièges (10, 10') **caractérisé en ce que** les sièges (10, 10') comportent des dossiers, la coque (50) présentant au niveau des dossiers une hauteur (H2) sensiblement égale à celle des dossiers (H2).

25. Véhicule de transport défini selon l'une quelconque des revendications 20 à 24, intégrant un siège en ensemble de deux sièges (10, 10') **caractérisé en ce que** les sièges (10, 10') comportent des assises, la coque présentant au niveau des accoudoirs (20, 20') une hauteur (H3) sensiblement égale à celle des assises (H4).

26. Véhicule de transport défini selon l'une quelconque des revendications 20 à 25, intégrant un siège en ensemble de deux sièges (10, 10') **caractérisé en ce que** les accoudoirs présentent une partie frontale enveloppée par la coque.

27. Véhicule de transport défini selon l'une quelconque des revendications 20 à 26, intégrant un siège en ensemble de deux sièges (10, 10') **caractérisé en ce que** une console centrale (40, 40') est disposée entre les deux sièges (10, 10').

28. Véhicule de transport défini selon l'une quelconque des revendications 20 à 27, intégrant un siège en ensemble de deux sièges (10, 10') **caractérisé en ce que** la coque (50) présente un renfoncement (51) au niveau de la console centrale (40, 40') afin d'augmenter l'espace disponible à l'arrière du siège.

29. Véhicule de transport défini selon l'une quelconque des revendications 20 à 28, intégrant un siège en ensemble de deux sièges (10, 10') **caractérisé en ce que** des écrans vidéos (55) sont intégrés en face arrière de la coque.

30. Véhicule de transport défini selon la revendication 28, intégrant un siège en ensemble de deux sièges (10, 10') **caractérisé en ce que** des repose-pieds (52) sont intégrés dans le renfoncement (51).

## Claims

1. Transport vehicle comprising a seat,
- this vehicle having a longitudinal axis (15),
- the seat comprising an armrest (20) provided with a plate (22) allowing the occupant of the seat to lay his/her arm thereon, this armrest (20) having an axis (24) which extends in the longitudinal direction of the plate (22),
- this axis (24) being shifted angularly relative to the seat cushion structure (11) of the seat (10), so as to provide a free spacing (30) between the seat (10) and the armrest (20),
- as a result of the fishbone arrangement of the seat (10), the axis (24) of the armrest (20) being substantially parallel to the longitudinal axis (15) of the transport vehicle.

2. Transport vehicle according to claim 1, **characterized in that** the free spacing (30) between the armrest (20) and the seat cushion structure (11) of the seat (10) is V-shaped.

3. Transport vehicle according to anyone of the preceding claims, **characterized in that** a housing (30) is integrated under the free spacing.

4. Transport vehicle according to anyone of the preceding claims, **characterized in that** the armrest (20) comprises a shock absorber material.

5. Transport vehicle according to anyone of the preceding claims, **characterized in that** a part (23) of the armrest is flexible.

6. Transport vehicle according to anyone of the preceding claims, **characterized in that** the armrest (20) includes a support (21) and a horizontal plate (31), the plate (31) being wider than the support (21), so that a part of the plate protrudes from the support, on the support side facing the seat cushion of the seat.

7. Transport vehicle according to anyone of the preceding claims, **characterized in that** the armrest (20) is retractable.

8. Transport vehicle according to the preceding claim, **characterized in that** the armrest (20) is retractable vertically between a high position and a low position in which the top of the armrest comes up to the seat cushion (11) of the seat (10).

9. Transport vehicle defined according to one of the claims 1 to 8, integrating a seat comprising at least one seat back (12) and one seat cushion (11) with an axis (14) and comprising at least one armrest (20), on the closed angle side relative to a longitudinal axis (15) of the vehicle,
- this armrest (20) comprising a plate (22) allowing the occupant of the seat to lay his/her arm thereon, this armrest (20) having an axis (24) which extends in the longitudinal direction of the plate (22),
- this axis (24) of the armrest being shifted angularly relative to the seat cushion structure (11) of the seat (10), so as to provide a free spacing (30) between the seat (10) and the armrest (20),
**characterized in that**
- the axis (14) of the seat cushion is shifted angularly relative to the longitudinal axis (15) of the transport vehicle,
- this axis (24) of the armrest being substantially parallel to the longitudinal axis (15) of the transport vehicle.

10. Transport vehicle defined according to claim 9, integrating a fishbone seat **characterized in that** a console (40) is arranged on the open angle side of the seat beside said seat.

11. Transport vehicle defined according to the preceding claim, integrating a fishbone seat **characterized in that** the console (40) includes several storage spaces.

12. Transport vehicle defined according to claim 10 or 11, integrating a fishbone seat **characterized in that** the armrest (20) is provided with an external wall, and **in that** a shell (50) surrounds the external wall of the armrest (20) and the seat back (12) of the seat.

13. Transport vehicle defined according to anyone of the claims 10 to 12, integrating a fishbone seat **characterized in that** a shell (50) surrounds the seat back (12) of the seat, the external wall of the armrest (20) and the console (40).

14. Transport vehicle defined according to anyone of the claims 12 and 13, integrating a fishbone seat **characterized in that** the shell (50) is on the whole V-shaped.

15. Transport vehicle defined according to anyone of the claims 12 to 14, integrating a fishbone seat **characterized in that** the shell (50) is made of a thermosetting material.

16. Transport vehicle defined according to anyone of the claims 12 to 15, integrating a fishbone seat **characterized in that** the shell (50) is formed by a part in one piece.

17. Transport vehicle defined according to anyone of the claims 12 to 16, integrating a fishbone seat **characterized in that** a video screen (55) is integrated in the back side of the shell (50).

18. Transport vehicle defined according to anyone of claims 12 to 17, integrating a fishbone seat **characterized in that** footrests (52) are integrated in the back side of the shell (50).

19. Transport vehicle defined according to one of the claims 9 to 18, integrating a seat forming a set of two seats (10, 10').

20. Transport vehicle defined according to claim 19, integrating a seat forming a set of two seats (10, 10') **characterized in that** a shell (50) surrounds the set of two seats (10, 10').

21. Transport vehicle defined according to the preceding claim, integrating a seat forming a set of two seats (10, 10') **characterized in that** the shell (50) is made of a thermosetting material.

22. Transport vehicle defined according to the claim 20 or 21, integrating a seat forming a set of two seats (10, 10') **characterized in that** the shell (50) surrounds the two seats (10, 10') in one piece.

23. Transport vehicle defined according to anyone of the claims 20 and 21, integrating a seat forming a set of two seats (10, 10') **characterized in that** the shell (50) consists of two parts, each part surrounding one of the seats, which makes it possible to produce individual seats and sets of two seats on the same production line.

24. Transport vehicle defined according to anyone of the claims 20 to 23, integrating a seat forming a set of two seats (10, 10') **characterized in that** the seats (10, 10') comprise seat backs, the shell (50) having at the seat back a height (H2) substantially equal to that of the seat back (H2).

25. Transport vehicle defined according to anyone of the claims 20 to 24, integrating a seat forming a set of two seats (10, 10') **characterized in that** the seats (10, 10') comprise seat cushions, the shell having at the armrests (20, 20') a height (H3) substantially equal to that of the seat cushions (H4).

26. Transport vehicle defined according to anyone of the claims 20 to 25, integrating a seat forming a set of two seats (10, 10') **characterized in that** the armrests are provided with frontal parts surrounded by the shell.

27. Transport vehicle defined according to anyone of the claims 20 to 26, integrating a seat forming a set of two seats (10, 10') **characterized in that** a central console (40, 40') is arranged between the two seats (10, 10').

28. Transport vehicle defined according to anyone of the claims 20 to 27, integrating a seat forming a set of two seats (10, 10') **characterized in that** the shell (50) is provided with a recess (51) at the central console (40, 40') in order to increase the available space at the back of the seat.

29. Transport vehicle defined according to anyone of the claims 20 to 28, integrating a seat forming a set of two seats (10, 10') **characterized in that** video screens (55) are integrated in the back side of the shell.

30. Transport vehicle defined according to claim 28, integrating a seat forming a set of two seats (10, 10') **characterized in that** footrests (52) are integrated in the recess (51).

## Patentansprüche

1. Transportfahrzeug, umfassend einen Sitz, wobei
- dieses Fahrzeug eine Längsachse (15) aufweist,
- der Sitz eine Armlehne (20) mit einem Tablett (22) umfasst, das dem Inhaber des Sitzes erlaubt, seinen Arm zu stellen, wobei diese Armlehne (20) eine sich in der Längsrichtung des Tabletts (22) erstreckende Achse (24) aufweist,
- diese Achse (24) winkelig bezogen auf der Sitzpolsterstruktur (11) des Sitzes (10) verschoben ist, um zwischen dem Sitz (10) und der Armlehne (20) einen freien Abstand (30) zu lassen,
- die Fischgrätenanordnung des Sitzes (10) zur Folge hat, dass sich die Achse (24) der Armlehne (20) etwa parallel zur Längsachse (15) des Transportfahrzeugs erstreckt.

2. Transportfahrzeug nach Anspruch 1, **dadurch gekennzeichnet, dass** der freie Abstand (30) zwischen der Armlehne (20) und der Sitzpolsterstruktur (11) des Sitzes (10) V-förmig ist.

3. Transportfahrzeug nach einem der vorhergehenden Ansprüche, **dadurch gekennzeichnet, dass** eine Aufnahme (30) unter dem freien Abstand integriert ist.

4. Transportfahrzeug nach einem der vorhergehenden Ansprüche, **dadurch gekennzeichnet, dass** die Armlehne (20) ein Stoßdämpfermaterial enthält.

5. Transportfahrzeug nach einem der vorhergehenden Ansprüche, **dadurch gekennzeichnet, dass** ein Teil (23) der Armlehne flexibel ist.

6. Transportfahrzeug nach einem der vorhergehenden Ansprüche, **dadurch gekennzeichnet, dass** die Armlehne (20) einen Träger (21) und ein horizontales Tablett (31) umfasst, wobei das Tablett (31) breiter ist, als der Träger (21), sodass ein Teil des Tabletts über den Träger vorsteht, auf der das Sitzpolster des Sitzes gegenüberliegenden Seite des Trägers.

7. Transportfahrzeug nach einem der vorhergehenden Ansprüche, **dadurch gekennzeichnet, dass** die Armlehne (20) einziehbar ist.

8. Transportfahrzeug nach dem vorhergehenden Anspruch, **dadurch gekennzeichnet, dass** die Armlehne (20) vertikal zwischen einer hohen Stellung und einer niedrigen Stellung einziehbar ist, in der der obere Teil der Lehne die Ebene des Sitzpolsters (11) des Sitzes (10) erreicht.

9. Transportfahrzeug nach einem der Ansprüche 1 bis 8, integrierend einen Sitz, der wenigstens eine Rückenlehne (12) und ein Sitzpolster (11) mit einer Achse (14) umfasst, und der wenigstens eine Armlehne (20) umfasst, auf der geschlossenen Winkelseite bezogen auf eine Längsachse (15) des Fahrzeugs, wobei
- diese Armlehne (20) ein Tablett (22) umfasst, das dem Inhaber des Sitzes erlaubt, seinen Arm zu stellen, wobei diese Armlehne (20) eine sich nach der Längsrichtung des Tabletts (22) erstreckende Achse (24) aufweist,
- diese Armlehnachse (24) winklig bezogen auf die Sitzpolsterstruktur (11) des Sitzes (10) verschoben ist, um zwischen dem Sitz (10) und der Armlehne (20) einen freien Abstand (30) zu lassen, **dadurch gekennzeichnet, dass**
- die Achse (14) des Sitzpolsters winklig bezogen auf die Längsachse (15) des Transportfahrzeugs verschoben ist,
- diese Armlehnachse (24) etwa parallel zur Längsachse (15) des Transportfahrzeugs ist.

10. Transportfahrzeug nach Anspruch 9, integrierend einen Fischgrätensitz, **dadurch gekennzeichnet, das** eine Konsole (40) auf der offenen Winkelseite des Sitzes neben dem genannten Sitz angeordnet ist.

11. Transportfahrzeug nach dem vorhergehenden Anspruch, integrierend einen Fischgrätensitz, **dadurch gekennzeichnet, dass** die Konsole (40) mehrere Aufbewahrungsräume einschließt.

12. Transportfahrzeug nach Anspruch 10 oder 11, integrierend einen Fischgrätensitz, **dadurch gekennzeichnet, dass** die Armlehne (20) mit einer externen Wand versehen ist, und dass eine Schale (50) die externe Wand der Armlehne (20) und die Rückenlehne (12) des Sitzes einhüllt.

13. Transportfahrzeug nach einem der Ansprüche 10 bis 12, integrierend einen Fischgrätensitz, **dadurch gekennzeichnet, dass** eine Schale (50) die Rückenlehne (12) des Sitzes, die externe Wand der Armlehne (20), und die Konsole (40) einhüllt.

14. Transportfahrzeug nach einem der Ansprüche 12 und 13, integrierend einen Fischgrätensitz, **dadurch gekennzeichnet, dass** die Schale (50) insgesamt V-förmig ist.

15. Transportfahrzeug nach einem der Ansprüche 12 bis 14, integrierend einen Fischgrätensitz, **dadurch gekennzeichnet, dass** die Schale (50) aus warmaushärtendem Material ist.

16. Transportfahrzeug nach einem der Ansprüche 12 bis 15, integrierend einen Fischgrätensitz, **dadurch gekennzeichnet, dass** die Schale (50) von einem Teil aus einem Stück gebildet wird.

17. Transportfahrzeug nach einem der Ansprüche 12 bis 16, integrierend einen Fischgrätensitz, **dadurch gekennzeichnet, dass** ein Videobildschirm (55) in der Rückwand der Schale (50) integriert ist.

18. Transportfahrzeug nach einem der Ansprüche 12 bis 17, integrierend einen Fischgrätensitz, **dadurch gekennzeichnet, dass** Fußstützen (52) in der Rückwand der Schale (50) integriert sind.

19. Transportfahrzeug nach einem der Ansprüche 9 bis 18, integrierend einen eine Einheit mit zwei Sitzen (10, 10') bildenden Sitz.

20. Transportfahrzeug nach Anspruch 19, integrierend einen eine Einheit mit zwei Sitzen (10, 10') bildenden Sitz, **dadurch gekennzeichnet, dass** eine Schale (50) die Einheit mit zwei Sitzen (10, 10') einhüllt.

21. Transportfahrzeug nach dem vorhergehenden Anspruch, integrierend einen eine Einheit mit zwei Sitzen (10, 10') bildenden Sitz, **dadurch gekennzeichnet, dass** eine Schale (50) aus warmaushärtendem Material ist.

22. Transportfahrzeug nach Anspruch 20 oder 21, integrierend einen eine Einheit mit zwei Sitzen (10, 10') bildenden Sitz, **dadurch gekennzeichnet, dass** eine Schale (50) die zwei Sitze (10, 10') aus einem Stück einhüllt.

23. Transportfahrzeug nach einem der Ansprüche 20 und 21, integrierend einen eine Einheit mit zwei Sitzen (10, 10') bildenden Sitz, **dadurch gekennzeichnet, dass** eine Schale (50) aus zwei Teilen besteht, wobei jedes Teil einen der Sitze einhüllt, was erlaubt, Einzelsitze und Einheiten mit zwei Sitzen auf dem gleichen Fließband zu produzieren.

24. Transportfahrzeug nach einem der Ansprüche 20 bis 23, integrierend einen eine Einheit mit zwei Sitzen (10, 10') bildenden Sitz, **dadurch gekennzeichnet, dass** die Sitze (10, 10') Rückenlehnen umfassen, wobei die Schale (50) an den Rückenlehnen eine etwa der Höhe (H2) der Rückenlehnen entsprechenden Höhe (H2) aufweist.

25. Transportfahrzeug nach einem der Ansprüche 20 bis 24, integrierend einen eine Einheit mit zwei Sitzen (10, 10') bildenden Sitz, **dadurch gekennzeichnet, dass** die Sitze (10, 10') Sitzpolster umfassen, wobei die Schale an den Armlehnen (20, 20') eine etwa der Höhe (H4) der Sitzpolster entsprechende Höhe (H3) aufweist.

26. Transportfahrzeug nach einem der Ansprüche 20 bis 25, integrierend einen eine Einheit mit zwei Sitzen (10, 10') bildenden Sitz, **dadurch gekennzeichnet, dass** die Armlehnen ein von der Schale eingehülltes Frontteil aufweisen.

27. Transportfahrzeug nach einem der Ansprüche 20 bis 26, integrierend einen eine Einheit mit zwei Sitzen (10, 10') bildenden Sitz, **dadurch gekennzeichnet, dass** zwischen den zwei Sitzen (10, 10') eine zentrale Konsole (40, 40') angeordnet ist.

28. Transportfahrzeug nach einem der Ansprüche 20 bis 27, integrierend einen eine Einheit mit zwei Sitzen (10, 10') bildenden Sitz, **dadurch gekennzeichnet, dass** die Schale (50) eine Vertiefung (51) bei der zentralen Konsole (40, 40 ') aufweist, um den verfügbaren Raum im hinteren Teil des Sitzes zu vergrößern.

29. Transportfahrzeug nach einem der Ansprüche 20 bis 28, integrierend einen eine Einheit mit zwei Sitzen (10, 10') bildenden Sitz, **dadurch gekennzeichnet, dass** Videodisplays (55) in der Rückwand der Schale integriert sind.

30. Transportfahrzeug nach Anspruch 28, integrierend einen eine Einheit mit zwei Sitzen (10, 10') bildenden Sitz, **dadurch gekennzeichnet, dass** Fußstützen (52) in der Vertiefung (51) integriert sind.
